# EUROPEAN PATENT APPLICATION

(11) **EP 4 151 412 A1**
(43) Date of publication of application: **22.03.2023**
(21) Application number: 21808419.2
(22) Date of filing: 14.05.2021
(51) Int. Cl.: B41J 2/01, C09D 11/322, B41M 5/00

(54) **RECORDING METHOD AND AQUEOUS INK FOR RECORDING**

(30) Priority: 18.05.2020 JP 2020086692
(71) Applicant: BROTHER KOGYO KABUSHIKI KAISHA, Nagoya-shi, Aichi 467-8561 (JP)
(72) Inventor: TANAKA, Hiroyuki, Nagoya-shi Aichi 467-8561 (JP); OKUMURA, Yuki, Nagoya-shi Aichi 467-8561 (JP)
(74) Representative: Prüfer & Partner mbB Patentanwälte · Rechtsanwälte
(86) International application number: PCT/JP2021/018376
(87) International publication number: WO 2021/235341

(57) **Abstract**

The present invention provides a means which is capable of solving both the problem of burying with respect to coated paper and the problem of print density with respect to non-coated paper. According to the present invention, a printing device 10 ejects an aqueous ink for recording onto a sheet 6 from a printing head 34, said sheet 6 being conveyed in a conveyance direction, and heats the aqueous ink for recording by means of a heater 36 at a cumulative heat quantity Q1 under the condition that the recording medium is determined to be coated paper, while heating the aqueous ink for recording by means of the heater 36 at a cumulative heat quantity Q2 under the condition that the recording medium is determined not to be coated paper. The aqueous ink for recording contains a resin dispersed pigment, fine resin particles, a water-soluble organic compound and water. The melting point of the water-soluble organic compound is within the range of from 20°C to 55°C. The viscosity of a 50% by mass aqueous solution of the water-soluble organic compound is 8.5 mPa·s or more at 20°C, while being 90 mPa·s or less at 50°C.

## Description

### TECHNICAL FIELD

The present invention relates to a recording method that changes a cumulative heating amount according to whether a recording medium is coated paper, in order to fixate ink that has been discharged and adhered on a recording medium, and relates to a water-based recording ink that is suitable for a recording device that changes a cumulative heating amount according to whether a recording medium is coated paper, in order to fixate ink that has been discharged and adhered on a recording medium

### BACKGROUND ART

A printing device that fixates ink discharged from a nozzle of a print head and adhered to a recording medium by heating the recording medium with a heater (see patent document 1) is known.

### CITATION LIST

### PATENT DOCUMENTS

Patent Document 1: Japanese Patent No. 4505921

### SUMMARY OF INVENTION

### PROBLEM TO BE SOLVED BY INVENTION

Recording media include so-called coated paper to which a coating is applied such that the recording surface becomes smooth and non-coated paper having no coating applied. On coated paper, adhered ink does not readily penetrate the paper and easily remains on the recording surface. Therefore, there is a problem with coated paper in that the ink does not readily spread on the recording surface. As a result, there is a problem with coated paper in that ink dots readily separate, and so-called bridging is not good. Adding a surfactant to the ink is a conceivable solution to this problem.

However, on non-coated paper, the ink easily penetrates into the paper and the coloring material remaining on the recording surface decreases, and thus, printing density of the recorded image easily deteriorates. Lowering surfactant contained in the ink is a conceivable solution to this problem.

In order to improve the versatility of a recording device, it is desirable that both coated paper and non-coated paper can be used, but as described above, means for solving the problem of coated paper and means for solving the problem of non-coated paper have conflicting points, and therefore, it was difficult to solve both problems.

In light of the above circumstances, an object of the present invention is to provide means that can solve both the problem of bridging on coated paper and the problem of printing density on non-coated paper.

### MEANS FOR SOLVING PROBLEM

The present invention is a recording method for discharging water-based recording ink from a head onto a recording medium conveyed in a conveying direction by a conveyance mechanism, using a heating unit to heat the recording medium or the water-based recording ink adhered to the recording medium by a cumulative heating amount Q1 on the condition that the recording medium is determined to be coated paper, and using a heating unit to heat the recording medium or the water-based recording ink adhered to the recording medium by a cumulative heating amount Q2 smaller than the cumulative heating amount Q1 on the condition that the recording medium is determined to not be coated paper. The water-based recording ink includes a resin dispersion pigment, fine resin particle, a water-soluble organic compound, and water. The melting point of the water-soluble organic compound is within a range of 20°C to 55°C. The viscosity of a 50 mass% aqueous solution of the water-soluble organic compound is 8.5 mPa·s or more at 20°C and 90 mPa·s or less at 50°C.

Furthermore, the present invention is a water-based recording ink used in a recording device for discharging water-based recording ink from a head onto a recording medium conveyed in a conveying direction by a conveyance mechanism, using a heating unit to heat the recording medium or the water-based recording ink adhered to the recording medium by a cumulative heating amount Q1 on the condition that the recording medium is determined to be coated paper, and using a heating unit to heat the recording medium or the water-based recording ink adhered to the recording medium by a cumulative heating amount Q2 smaller than the cumulative heating amount Q1 on the condition that the recording medium is determined to not be coated paper, the water-based recording ink including a resin dispersion pigment, fine resin particle, a water-soluble organic compound, and water. The melting point of the water-soluble organic compound is within a range of 20°C to 55°C. The viscosity of a 50 mass% aqueous solution of the water-soluble organic compound is 8.5 mPa·s or more at 20°C and 90 mPa·s or less at 50°C.

### EFFECT OF INVENTION

The present invention can solve both the problem of bridging on coated paper and the problem of printing density on non-coated paper.

### BRIEF DESCRIPTION OF DRAWINGS

[FIG. 1] FIG. 1 is a perspective view of a printing device 10.
[FIG. 2] FIG. 2 is a schematic diagram illustrating an internal configuration of the printing device 10.
[FIG. 3] FIG. 3 is a schematic diagram of a heater 38 viewed from above.
[FIG. 4] FIG. 4 is a block diagram illustrating a controller 74.
[FIG. 5] FIG. 5 is a flowchart illustrating operation of the printing device 10.

### DESCRIPTION OF EMBODIMENTS

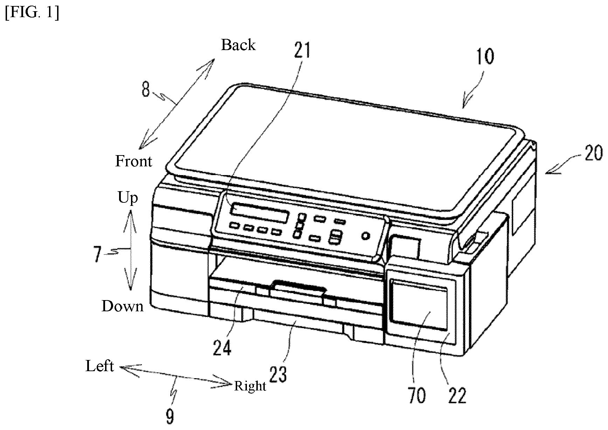

The printing device 10 according to an embodiment of the present invention will be described below. Note that the embodiment described below is merely one example of the present invention, and it goes without saying that the embodiment can be appropriately changed within a scope that does not change the essence of the present invention. Furthermore, in the description below, movement from the start point to the end point of the arrow is expressed as an orientation, and traffic on the line connecting the start point and the end point of the arrow is expressed as a direction. Moreover, in the description below, a vertical direction 7 is defined with reference to a state in which the printing device 10 is installed so as to be usable (state of FIG. 1), a front and back direction 8 is defined such that a side where a dispensing port 13 is provided as the front side (front surface), and a left and right direction 9 is defined from a point of view of the printing device 10 from a front side (front surface).

### [External Configuration of the Printing Device 10]

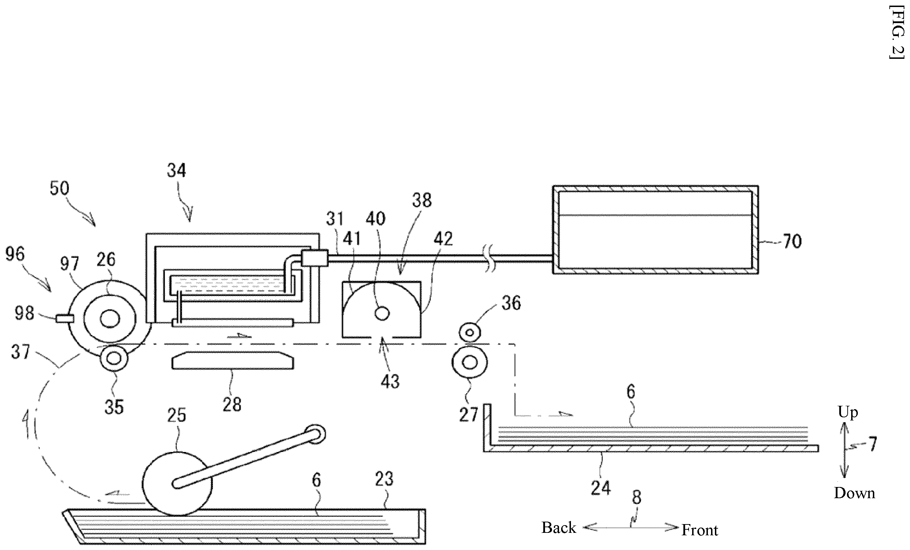

As illustrated in FIG. 1, the printing device 10 is provided with a housing 20, and a panel unit 21, a cover 22, a paper feed tray 23, and a paper dispensing tray 24, held by the housing 20. The printing device 10 records an image on a sheet 6 (see FIG. 2).

The sheet 6 is an example of a recording medium. The sheet 6 may be a recording medium that is cut to a predetermined dimension, it may be drawn from a roll wound in a cylindrical shape, or it may be of a fan-fold type. The sheet 6 may be non-coated paper or coated paper. "Coated paper" means, for example, paper composed of pulp of high-quality printing paper or medium-quality printing paper and coated with a coating agent in order to improve smoothness, whiteness, glossiness, and the like, and specific examples include high-quality coated paper, medium-quality coated paper, and the like. Furthermore, the sheet 6 may be sticker paper that combines an adhesive and release paper.

The panel unit 21 is provided with a touch panel and a plurality of operation switches. The panel unit 21 accepts user operations.

As illustrated in FIG. 2, a paper feed tray 23 is positioned on a lower portion of the housing 20. The paper dispensing tray 24 is a lower part of the housing 20 and is positioned on the paper feed tray 23. A cover 22 is positioned on a right part of the front surface of the housing 20. The cover 22 can be rotated with respect to the housing 20. When the cover 22 is opened, a tank 70 for storing ink can be accessed.

Note that while only one tank 70 is illustrated in the present embodiment, the tank 70 is not limited to storing ink of one color such as black, and it may have four storage chambers that, for example, respectively store ink of the four colors of black, yellow, cyan, and magenta.

As illustrated in FIG. 2, the housing 20 holds a print engine 50 therein. The printing engine 50 is mainly provided with a feed roller 25, a conveyance roller 26, a dispensing roller 27, a platen 28, and a recording unit. The feed roller 25 is held by a frame not illustrated provided in the housing 20 so as to be able to abut the sheet 6 placed on the paper feed tray 23. The feed roller 25 is rotated by a motor not illustrated. The rotating feed roller 25 sends the sheet 6 to a conveyance path 37. The conveyance path 37 is a space partitioned by a guide member not illustrated. In the illustrated example, the conveying path 37 extends curving from a rear end of the paper feed tray 23 to a position above the paper feed tray 23 and then extends forward. The feed roller 25, the conveyance roller 26, and the dispensing roller 27 are examples of the conveyance mechanism.

The conveyance roller 26 is positioned downstream of the paper feed tray 23 in the conveying direction of the sheet 6. The conveyance roller 26 forms a roller pair together with a driven roller 35. The conveyance roller 26 is rotated by a motor not illustrated. The rotating conveyance roller 26 and the driven roller 35 simultaneously sandwich and convey the sheet 6 sent to the conveyance path 37 by the feed roller 25. The dispensing roller 27 is positioned downstream of the conveyance roller 26 in the conveying direction of the sheet 6. The dispensing roller 27 forms a roller pair together with a driven roller 36. The dispensing roller 27 is rotated by a motor not illustrated. The rotating dispensing roller 27 and the driven roller 36 simultaneously sandwich and convey the sheet 6 and dispense it in the paper dispensing tray 24. The platen 28 is positioned between the conveyance roller 26 and the dispensing roller 27 in the front and back direction 8, downstream of the conveyance roller 26, and upstream of the dispensing roller 27 in the conveyance direction of the sheet 6.

The conveyance roller 26 is provided with a rotary encoder 96. The rotary encoder 96 has an encoder disk 97 and an optical sensor 98. The encoder disk 97 is provided coaxially with the conveyance roller 26 and rotates together with the conveyance roller 26. A plurality of two kinds of indices having different transmissivity are alternatingly arranged on the whole circumference of the encoder disk 97 in the circumferential direction. The optical sensor 98 can optically read the two kinds of indices of the encoder disk 97. Two kinds of signals are outputted in the form of a pulse from the optical sensor 98 due to the optical sensor reading the two kinds of indices of the rotating encoder disk 97. The output signals of the optical sensor 98 are received by a controller that will be described later, and the rotational speed of the conveyance roller 26 is determined.

The recording unit has a print head 34 and a heater 38. The print head 34 is positioned between the conveyance roller 26 and the dispensing roller 27. The print head 34 may be a so-called serial head or a so-called line head. The print head 34 has therein a channel in which ink flows. The channel is made continuous with the tank 70 by a tube 31. That is, ink stored in the tank 70 is supplied to the print head 34 through the tube 31.

The platen 28 is positioned below the print head 34. An upper surface of the platen 28 is a supporting surface of the sheet 6. Although not shown in each drawing, an opening that generates suction pressure is formed on the upper surface of the platen 28. The sheet 6 is brought into close contact with the upper surface of the platen 28 via suction pressure generated on the upper surface of the platen 28.

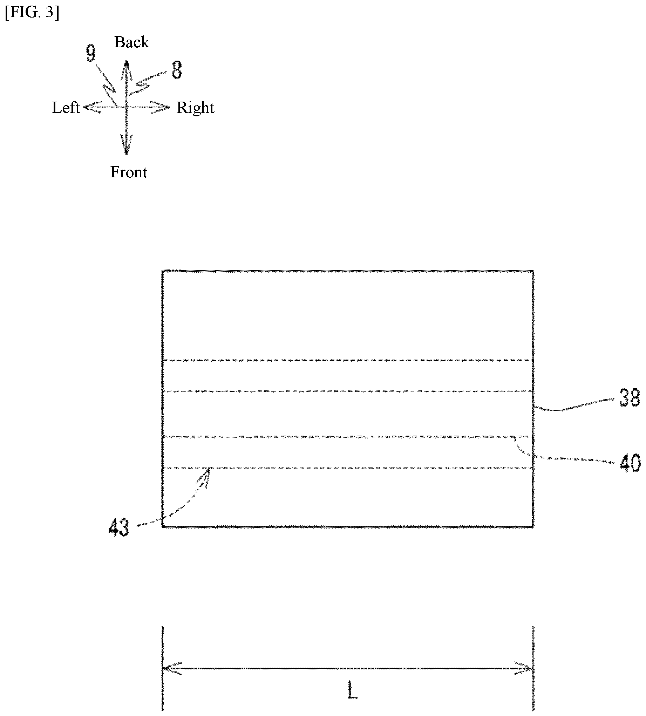

As illustrated in FIG. 2 and FIG. 3, the heater 38 is positioned above the conveyance path 37 downstream of the print head 34 and upstream of the dispensing roller 27. The heater 38 is a so-called halogen heater. The heater 38 is an example of the heating unit.

As illustrated in FIG. 2, the heater 38 is positioned downstream, that is, in front of, the print head 34 in the conveyance direction. The heater 38 has a halogen lamp 40, which is a heating element that radiates infrared rays, a reflecting plate 41, and a housing 42. The housing 42 has a shape substantially like a rectangular prism and opens downward. An opening 43 is positioned on a lower wall of the housing 42. Heat from the halogen lamp 40 and the reflecting plate 41 is radiated externally through the opening 43 or is blocked.

The halogen lamp 40 is positioned in an internal space of the housing 42. The halogen lamp 40 has an elongated cylindrical shape, and the left and right direction 9 is a longitudinal direction. In the internal space of the housing 42, the reflecting plate 41 is positioned above the halogen lamp 40. The reflecting plate 41 is a metal plate coated with a ceramic film or the like and is curved in an arc shape having a center axis near the opening 43. Note that a halogen lamp 40 coated with a ceramic film or the like may be used instead of the reflective plate 41.

The heater 38 heats at least one of the sheet 6 passing below the opening 43 and the ink adhered to the sheet 6. In this embodiment, the heater 38 heats both the sheet 6 and the ink. Fine resin particles are glass-transitioned by heating the ink, the sheet 6 passing below the heater 38 is cooled, and the glass-transitioned resin is hardened. Thus, the ink is fixated to the sheet 6.

The power consumption of the heater 38 is preferably 600 W or less, more preferably 400 W or less, and particularly preferably 200 W or less, due to the required size reduction. Power consumption of the heater 38 is related to energy (irradiation energy (β)) irradiated per unit area of the sheet from the heater 38. The irradiation energy (β) is a heating amount (J) applied to a unit area (cm²) of a sheet when the heater 38 is driven according to power consumption and the sheet moving below the heater 38 is moved at a constant conveying speed.

As illustrated in FIG. 3, an irradiated length L in the left and right direction 9 (an example of the width direction) of the heater 38, that is, a length L in the left and right direction 9 within the range in which the halogen lamp 40 and the opening 43 overlap, is preferably 25 cm or less, more preferably 21 cm or less, and particularly preferably 15 cm or less, due to the required size reduction.

The heater 38 is not limited to a halogen heater insofar as the sheet or ink can be heated. For example, the heater 38 may be a carbon heater, a dryer, an oven, a belt conveyor oven, or the like.

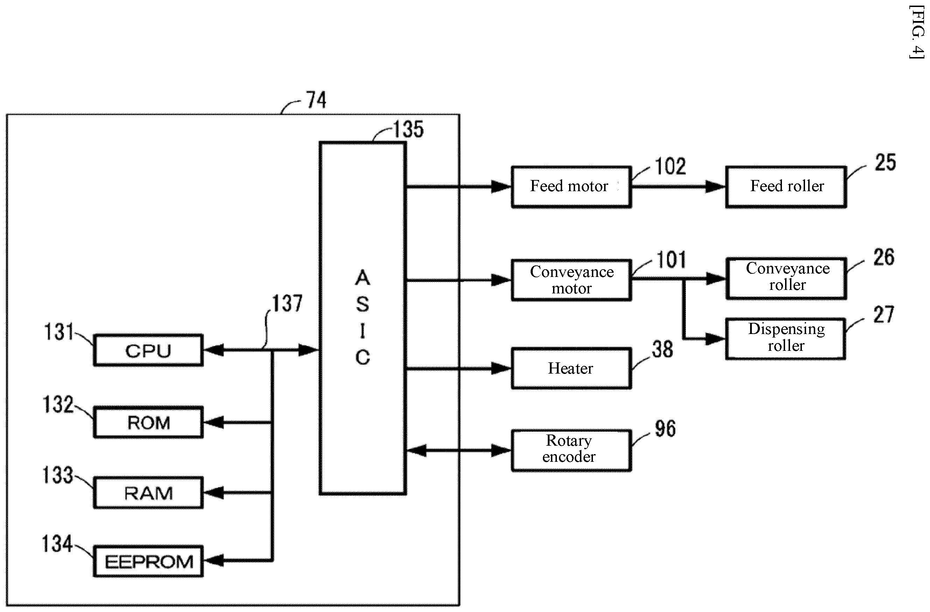

As illustrated in FIG. 4, a controller 74 and a power circuit (not illustrated) are disposed in an internal space of a housing 14. The controller 74 is connected to a CPU 131, a ROM 132, a RAM 133, an EEPROM 134, an ASIC 135, and the like to allow data communication via a bus 137. Operation of the printing device 10 is controlled by the CPU 131 executing a program stored in the ROM 132 and the ASIC 135 performing a specific set function.

Note that the controller 74 may execute various processes via the CPU 131 alone or may execute various processes via the ASIC 135 alone. Furthermore, a plurality of the CPU 131 is installed in the controller 74, and the controller 74 may be such that the plurality of CPU 131 apportions each process. Moreover, a plurality of the ASIC 135 is installed in the controller 74, and the controller 74 may be such that the plurality of ASIC 135 apportions each process.

The power supply circuit is a circuit configured from a large capacity capacitor and the like. In the present embodiment, the power supply circuit is installed on a substrate configured from phenolic paper or the like. The power supply circuit is a circuit for performing conversion of power for supplying power to each component provided to the printing device 10.

For example, power is supplied from a power supply circuit to a feeding motor 102 and a conveying motor 101, and rotation of each motor is transmitted to the feed roller 25, the conveyance roller 26, and the dispensing roller 27. Furthermore, power is supplied from the power supply circuit to the heater 38.

When the sheet 6 at the position opposite to the heater 38 is coated paper, the rotational speed of a first conveyance roller 60 and a second conveyance roller 62 is controlled such that the cumulative heating amount Q1 received from the heater 38 per unit area of the sheet 6 is preferably 3.0 J/cm² or less, more preferably 2.1 J/cm² or less. That is, the conveying speed of the sheet 6 below the heater 38 is controlled. The conveying speed of the sheet 6 below the heater 38 is preferably within a range of 15 cm/s to 100 cm/s, more preferably within a range of 15 cm/s to 70 cm/s. When the sheet 6 is non-coated paper, it is preferable that a cumulative heating amount Q2 received from the heater 38 per unit area of the sheet 6 is smaller than the cumulative heating amount Q1 (Q1 > Q2). The cumulative heating amount Q2 is preferably 0.05 J/cm² or less, more preferably 0 J/cm². Furthermore, the range of Q2/Q1 is preferably 0 to 0.05, more preferably 0.

The cumulative heating amount per unit area of the sheet 6 can be measured, for example, as follows. A power density (W/m²), which is the power per unit area of the heater 38, is calculated from the power applied to the heater 38 and the area (for example, the projected area of the opening 43) of the region where the heater 38 radiates infrared rays (the region in a plane in the front and back direction 8 and the left and right direction 9). For example, when the power consumption of the heater 38 is 600 W and the region where the heater 38 radiates infrared rays is 129 cm², the power density is 4.7 W/cm². Furthermore, time (seconds) required for a fixed point on the sheet 6 to pass through a region where the heater 38 radiates infrared rays is calculated from the conveying speed of the sheet 6. Then, the cumulative heating amount (J/cm²) is calculated by multiplying this time by the power density.

### [Ink Composition]

Details of the ink (an example of the water-based recording ink) stored in the tank 70 are described below. The ink includes a resin dispersion pigment, fine resin particles, a water-soluble organic compound, and water.

The resin-dispersed pigment is able to be dispersed in water by, for example, a pigment dispersion resin (resin dispersant). The resin-dispersed pigment is not particularly limited, and examples include carbon black, inorganic pigments, organic pigments, and the like. Examples of the carbon black include furnace black, lamp black, acetylene black, channel black, and the like. Examples of inorganic pigments include titanium oxide, iron oxide based inorganic pigments, carbon black based inorganic pigments, and the like. Examples of organic pigments include: azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye lake pigments such as basic dye type lake pigments and acidic dye type lake pigments; nitro pigments; nitroso pigment; aniline black daylight fluorescent pigments; and the like. Other examples of resin-dispersed pigments include: C.I. Pigment Black 1, 6, and 7; C.I. Pigment Yellow 1, 2, 3, 12, 13, 14, 15, 16, 17, 55, 73, 74, 75, 78, 83, 93, 94, 95, 97, 98, 114, 128, 129, 138, 150, 151, 154, 180, 185, and 194; C. I. Pigment Orange 31 and 43; C.I. Pigment Red 2, 3, 5, 6, 7, 12, 15, 16, 48, 48:1, 48:3, 53:1, 57, 57:1, 112, 122, 123, 139, 144, 146, 149, 150, 166, 168, 175, 176, 177, 178, 184, 185, 190, 202, 209, 221, 222, 224, 238, and 254; C. I. Pigment Violets 19 and 196; C. I. Pigment Blue 1, 2, 3, 15, 15:1, 15:2, 15:3, 15:4, 16, 22, and 60; C. I. Pigment Green 7 and 36; solid solutions of these pigments; and the like. Note that the ink may further contain other pigments, dyes, and the like in addition to the resin-dispersed pigment.

The solid pigment content (solid pigment quantity (P)) of the resin dispersion pigment in the total amount of the water-based ink is not particularly limited and can be suitably determined, for example, by a desired optical density, chroma, or the like. The solid pigment quantity (P) is preferably within, for example, a range of 0.1 to 20 mass%, more preferably within a range of 1 to 15 mass%, and particularly preferably within a range of 2 to 10 mass%. The solid pigment quantity (P) is the mass of only the pigment and does not include the mass of the fine resin particles. One type of resin dispersion pigment may be used alone, or two or more types may be used in combination.

Fine resin particles containing at least one of methacrylic acid and acrylic acid as a monomer can be used as the fine resin particles, and for example, a commercial product can be used. The fine resin particles may further contain styrene, vinyl chloride, or the like as a monomer. The fine resin particles may be contained, for example, in a resin emulsion. The resin emulsion is composed of, for example, fine resin particles and a dispersion medium (for example, water or the like). The fine resin particles are dispersed in a specific particle diameter range without being dissolved in the dispersion medium. Examples of fine resin particles contained in the resin emulsion include acrylic acid resins, maleic acid ester resins, vinyl acetate resins, carbonate resins, polycarbonate resins, styrene resins, ethylene resins, polyethylene resins, propylene resins, polypropylene resins, urethane resins, polyurethane resins, polyester resins, and copolymer resins of these.

A fine resin particle content (R) in the total amount of the water-based ink is preferably within, for example, a range of 0.1 to 30 mass%, more preferably within a range of 0.5 to 20 mass%, and particularly preferably within a range of 1 to 10 mass%. One type of fine resin particle may be used alone, or two or more types may be used in combination.

The melting point of the water-soluble organic compound is preferably within the range of 20°C to 55°C, more preferably within a range of 35°C to 55°C, and particularly preferably within a range of 35°C to 50°C.

The viscosity of the 50 mass% aqueous solution of the water-soluble organic compound is preferably no less than 8.5 mPa·s at 20°C and no more than 90 mPa·s at 50°C, more preferably no less than 15 mPa·s at 20°C and no more than 45 mPa·s at 50°C, particularly preferably no less than 20 mPa·s at 20°C and no more than 25 mPa·s at 50°C. As an example of the water-soluble organic compound, polyethylene glycol having a molecular weight within a range of 600 to 4,000 is preferable.

The organic solvent may contain an organic solvent other than the specific organic solvent. Penetrants other than the specific organic solvent are not particularly limited, and examples include glycerin, triethylene glycol, butylene glycol, dipropylene glycol, tripropylene glycol, thiodiglycol, trimethylolpropane, trimethylolethane, polyethylene glycol, polypropylene glycol, and the like. One type of the organic solvents may be used alone, or two or more types may be used in combination.

The water is preferably deionized water or pure water. The water content (W) in the total ink amount is preferably, for example, within a range of 10 to 90 mass%, more preferably within a range of 20 to 80 mass%. The water content (W) may be, for example, the remainder after other components.

The ink may further contain a conventionally known additive as necessary. Examples of additives include surfactants, pH adjusting agents, surface tension adjusting agents, fungicides, and the like. Examples of viscosity modifiers include polyvinyl alcohol, cellulose, water soluble resin, and the like.

The ink can be prepared, for example, by uniformly mixing a resin dispersion pigment, fine resin particles, a specific organic solvent, water, and, as necessary, other added components using a conventionally known method and removing insoluble matter using a filter or the like.

### [Operation of the Printing Device 10]

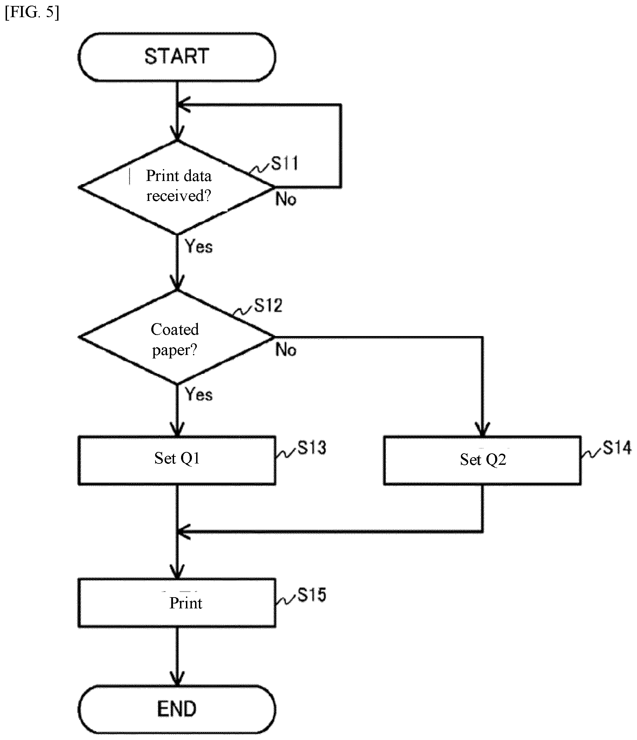

An image recording operation by the printing device 10 is described below with reference to FIG. 5.

When the controller 74 receives print data (S11: Yes), it is determined whether the sheet to be printed on is coated paper based on sheet information in the print data (S12). Note that the controller 74 may determine whether the sheet to be printed on is coated paper based on registered information of the sheet 6 stored in the paper feed tray 23 instead of the recording sheet information in the printing data.

In response to determining that the sheet to be printed on is coated paper (S12: Yes), the controller 74 stores the cumulative heating amount Q1 imparted to the sheet 6 as a setting value in memory such as the RAM 133 (S13). Furthermore, in response to determining that the sheet to be printed on is not coated paper (S12: No), the controller 74 stores the cumulative heating amount Q2 imparted to the sheet 6 as a setting value in memory (S14).

In this case, the cumulative heating amounts Q1 and Q2 are the cumulative heating amounts per unit area of the sheet 6 and are calculated as described above. Conveyance speeds V1 and V2 of the sheet 6 below the heater 38 respectively corresponding to the cumulative heating amounts Q1 and Q2 are set in memory such as the ROM 132.

Then, the controller 74 executes printing (S15). Specifically, the controller 74 rotates (forward rotation) the feed roller 25, the conveyance roller 26, and the dispensing roller 27 to send the sheet 6 to a lower side of the print head 34. Furthermore, the controller 74 energizes a halogen lamp 40 of the heater 38.

At the position opposite the heater 38, the controller 74 determines the conveyance speed V1 or the conveyance speed V2 of the sheet 6 conveyed in the conveyance direction (frontward in the front and back direction 8) by the conveyance roller 26 and the dispensing roller 27 based on the cumulative heating amount Q1 and Q2 and rotates the conveyance roller 26 and the dispensing roller 27. This type of control of the conveying speed is realized by, for example, controlling the rotation of the conveyance roller 26 based on a signal of the rotary encoder 96 provided on the conveyance roller 26. Note that the controller 74 may control the power (W) energizing the heater 38 such that the cumulative heating amounts Q1 and Q2 are achieved with a constant conveyance speed.

Then, the controller 74 discharges ink toward the sheet 6 from the print head 34 based on the print data while rotating (forward rotation) the feed roller 25, the conveyance roller 26, and the dispensing roller 27. The sheet 6 conveyed on the platen 28 toward the paper dispensing tray 24 moves toward the paper dispensing tray 24 while being suctioned to the upper surface of the platen 28 between the conveyance roller 26 and the dispensing roller 27. Ink drops discharged from the print head 34 adhere to the sheet 6 supported by the upper surface of the platen 28. When the sheet 6 to which ink drops adhere reaches the lower side of the heater 38, the sheet 6 is heated by the heater 38. The ink drops are fixated to the sheet 6 by heating using the heater 38. Then, the controller 74 dispenses the printed sheet 6 to the paper dispensing tray 24 and ends printing.

Due to the melting point of the water-soluble organic compound contained in the aqueous ink being within the above range and the viscosity of the 50 mass% aqueous solution of the water soluble organic compound being within the above range, bridging of the ink in the coated paper presumably improves due to the water-based ink on the sheet 6 flowing in a spreading manner due to heating by the cumulative heating amount Q1 using the heater 38. Furthermore, on non-coated paper, presumably, while spreading flow of the aqueous ink is suppressed by heating by the cumulative heating amount Q2 using the heater 38, the water-based ink thickens due to moisture in the aqueous ink being absorbed by the fibers of the paper on the sheet 6, the resin-dispersed pigment stays on the upper part of the sheet 6, and optical density improves.

Conversely, the desired effect cannot be obtained when the melting point of the water-soluble organic compound contained in the water-based ink is outside of the above range or the viscosity of the 50 mass% aqueous solution of the water-soluble organic compound is outside of the above range. Assuming that the viscosity at 50°C of the 50 mass% aqueous solution of the water-soluble organic compound exceeds the range given above, although an effect can be obtained in which the optical density of the printed portion on the non-coated paper improves, presumably, on coated paper, bridging of the water-based ink will be inferior because the aqueous ink on the sheet 6 will not flow even when heated by the cumulative heating amount Q1 using the heater 38. Furthermore, as another assumption, the viscosity at 20°C of the 50 mass% aqueous solution of the water-soluble organic compound is below the range given above, although the bridging of the water-based ink on the coated paper improves, presumably, on non-coated paper, the spreading flow of the water-based ink is not suppressed by heating by the cumulative heating amount Q2 smaller than the cumulative heating amount Q1 using the heater 38, and therefore, the resin dispersion pigment does not readily remain on the upper portion of the sheet 6, and optical density of the printed locations will be inferior.

Furthermore, when the relationship between the cumulative heating amount Q1 and the cumulative heating amount Q2 is the opposite (Q1 < Q2) to that described above, even when the viscosities at 20°C and 50°C of the 50 mass% aqueous solution of the water-soluble organic compound are both within the range described above, presumably, the bridging of the water-based ink will not improve due to the spreading flow of the water-based ink on coated paper, and the spreading flow of the water-based ink on non-coated paper is not suppressed, and therefore, the optical density of the printing location will be inferior.

### EXAMPLES

Examples of the present invention will be described below along with comparative examples. Note that the present invention is not limited to or constricted by the following examples and comparative examples.

### [Pigment Dispersion Solution A]

Pure water was added to 20 mass% of pigment (carbon black) and 7 mass% of a sodium hydroxide neutralized product of a styrene-acrylic acid copolymer (acid value of 175 mgKOH/g, molecular weight of 10,000) to make 100 mass% of the total, and a mixture was obtained by stirring and mixing. This mixture was placed in a wet sand mill filled with 0.3 mm diameter zirconia beads and then dispersed for 6 hours. Then, the zirconia beads were removed using a separator and filtered using a cellulose acetate filter having a pore diameter of 3.0 µm, thereby obtaining a pigment dispersion A. Note that the styrene-acrylic acid copolymer was a water-soluble polymer generally used as a pigment dispersant.

### [Preparation of Water-Based Recording Ink]

The following components, excluding the fine resin particles and resin-dispersed pigment dispersion solution in the composition shown in Table 1, were uniformly mixed to obtain an ink solvent. Next, the fine resin particles were added, and after mixing uniformly, the resin-dispersed pigment dispersion solution was added, and a mixture was obtained with the total amount being 100 mass%. The obtained mixture was filtered using a cellulose acetate membrane filter (pore diameter of 3.00 µm) made by Toyo Roshi Kaisha, Ltd. to obtain the water-based recording ink of examples 1 through 9 and comparative examples 1 through 6. Fine resin particles: "Mowinyl (registered trademark) 6969D" made by Japan Coating Resin Co., Ltd., "Superflex (registered trademark) 870" made by DKS Co., Ltd., "Mowinyl (registered trademark) DM774" made by Japan Coating Resin Co., Ltd., and "Polyzole (registered trademark) AP-3270N" made by Showa Denko Co., Ltd.

Water-soluble organic compound: polyethylene glycol (PEG600, melting point: 20°C, molecular weight: 600, 50% aqueous solution 20°C viscosity mPa s, 50% aqueous solution 50°C viscosity mPa·s), polyethylene glycol (PEG1000, melting point: 35°C, molecular weight: 1,000, 50% aqueous solution 20°C viscosity mPa·s), polyethylene glycol (PEG2000, melting point: 48°C, molecular weight: 2,000, 50% aqueous solution 20°C viscosity 33 mPa s, 50% aqueous solution 500°C viscosity 11 mPa·s), polyethylene glycol (PEG4000, melting point: 54°C, molecular weight: 4,000, 50% aqueous solution 20°C viscosity mPa·s, 50% aqueous solution, 50°C viscosity mPa·s), polyethylene glycol (PEG400, melting point: 6°C, molecular weight: 400, 50% aqueous solution 20°C viscosity 8 mPa·s, 50% aqueous solution 50°C viscosity 3 mPa·s), polyethylene glycol (PEG6000, melting point: 60°C, molecular weight: 6,000, 50% aqueous solution 20°C viscosity 338 mPa·s, 50% aqueous solution 50°C viscosity 94 mPa·s)
Wetting agent: triethylene glycol monobutyl ether
Surfactant: "Olfine (registered trademark) E1004" made by Nisshin Chemical Industry Co., Ltd.

Immediately after printing on coated paper (OK top coat from Oji Paper Co., Ltd., A4 size) or non-coated paper (BP60P made by Brother Industries, Ltd., A4 size) using the water-based recording ink of examples 1 through 9 and comparative examples 1 through 6, drying was performed at the cumulative heating amount Q1 or the cumulative heating amount Q2 listed in Table 1, and then bridging, optical density (hereinafter simply listed as "OD") and discharge properties were evaluated by the following methods.

### [Bridging]

Using a "Inkjet Printer MFC-J6995CDW" made by Brother Industries, Ltd., ink cartridges for black ink were filled with the water-based recording ink of examples 1 through 9 and comparative examples 1 through 6, an image of a single color patch with a resolution of 600×300 dpi was recorded on coated paper to produce evaluation samples. Then, the evaluation samples were passed directly under a "Promo Handy Mini SIR-760" IR heater made by Tohkoh Trade Co., Ltd. to dry them. Note that the heater-irradiated heating amount was changed within the range of the examples by changing the irradiation area after connecting a transformer to the IR heater. The printed solid portion was observed with the naked eye and evaluated according to the following criteria. Note that for comparative example 2, because scorching occurred in the single color patch portion, the evaluation was set to "NG."
A: White streaks cannot be seen from any distance.
B: White streaks can be seen from a distance closer than 30 cm.
C: White streaks can be seen from a distance of 30 cm.

### [OD]

Using an "Inkjet Printer MFC-J6995CDW" made by Brother Industries, Ltd., ink cartridges for black ink were filled with the water-based recording ink of examples 1 through 9 and comparative examples 1 through 6, and an image of a single color patch with a resolution of 600×300 dpi was recorded on non-coated paper to produce evaluation samples. Then, the evaluation samples were passed directly under a "Promo Handy Mini SIR-760" IR heater made by Tohkoh Trade Co., Ltd. to dry them. Note that the heater-irradiated heating amount was changed within the range of the examples by changing the irradiation area after connecting a transformer to the IR heater. Note that when the Q2 was set to 0, evaluation was performed without applying a voltage to the IR heater during a period from the start of printing the single color patch until the evaluation sample was passed directly below the IR heater. The printed solid portion was measured using a spectrophotometer "eXact" made by xRite, Inc. (measurement field: 2°, white reference: Abs (absolute white), light source: D50, density reference: ANSI T), and the OD values were evaluated according to the following criteria.
A: OD value of 1.30 or greater
B: OD value of 1.25 or greater
C: OD value less than 1.25

### [Discharge Properties]

Using an "Inkjet Printer MFC-J6995CDW" made by Brother Industries, Ltd., ink cartridges for black ink were filled with the water-based recording ink of examples 1 through 9 and comparative examples 1 through 6, an image of a single color patch with a resolution of 600×300 dpi was recorded on one side of the paper for five sheets, in succession, and then a pin check pattern was printed on non-coated paper. The number of nozzles for which there was no discharge was measured from the printing results of the pin check pattern and evaluated according to the following criteria.
A: Number of nozzles with no discharge is 1% or less
B: Number of nozzles with no discharge is 5% or less
C: The number of nozzles with no discharge is greater than 5%

The water-based recording ink compositions and evaluation results of examples 1 through 9 and comparative examples 1 through 6 are shown in Table 1.

**[TABLE 1]**

| | | | | | | Examples | | | | | | | | Comparative Examples | | | | | |
|---|---|---|---|---|---|---|---|---|---|---|---|---|---|---|---|---|---|---|---|
| | | | | | | 1 | 2 | 3 | 4 | 5 | 6 | 7 | 8 | 1 | 2 | 3 | 4 | 5 | 6 |
| | Resin-dispersed pigment | Carbon black | | | | 5.00 | 5.00 | 5.00 | 5.00 | 5.00 | 5.00 | 5.00 | 5.00 | 5.00 | 5.00 | 5.00 | 5.00 | 5.00 | 5.00 |
| | Fine resin particles | Mowinyl 6969D | | | | 5.00 | 5.00 | 5.00 | | | | | | 5.00 | 5.00 | 5.00 | | | |
| | | Superflex 870 | | | | | | | 5.00 | 2.50 | 7.50 | | | | | | 5.00 | 5.00 | 5.00 |
| | | Mowinyl DM774 | | | | | | | | | | 2.50 | | | | | | | |
| | | Polyzole AP-3270N | | | | | | | | | | | 2.50 | | | | | | |
| Water-based recording Ink composition | Water-soluble organic solvent | | Melting point (°C) | 20°C viscosity | 50°C viscosity | | | | | | | | | | | | | | |
| | | PEG600 | 20 | 19 | 9 | 10.00 | 10.00 | 10.00 | | | | | | 10.00 | 10.00 | 10.00 | 2.00 | | |
| | | PEG1000 | 35 | 30 | 13 | | | | 10.00 | 20.00 | 3.00 | | | | | | | | |
| | | PEG2000 | 48 | 50 | 23 | | | | | | | 10.00 | | | | | | | |
| | | PEG4000 | 54 | 98 | 43 | | | | | | | | 5.00 | | | | | | |
| | | PEG400 | 6 | 8 | 3 | | | | | | | | | | | | | 10.00 | |
| | | PEG6000 | 60 | 338 | 94 | | | | | | | | | | | | | | 3.00 |
| | Penetrant | Triethylene glycol monobutyl ether | | | | 3.00 | 3.00 | 3.00 | 3.00 | 3.00 | 3.00 | 3.00 | 3.00 | 3.00 | 3.00 | 3.00 | 3.00 | 3.00 | 3.00 |
| | Surfactant | Olfine E1004 | | | | 1.00 | 1.00 | 1.00 | 1.00 | 1.00 | 1.00 | 1.00 | 1.00 | 1.00 | 1.00 | 1.00 | 1.00 | 1.00 | 1.00 |
| | Water | | | | | Remainder | Remainder | Remainder | Remainder | Remainder | Remainder | Remainder | Remainder | Remainder | Remainder | Remainder | Remainder | Remainder | Remainder |
| Coated paper | | Cumulative heating amount Q1 (J/cm²) | | | | 1.0 | 3.0 | 1.0 | 1.0 | 1.0 | 1.0 | 1.0 | 1.0 | 0.0 | 5.9 | 1.0 | 1.0 | 1.0 | 1.0 |
| | | Conveying speed (mm/s) | | | | 400 | 200 | 1000 | 400 | 400 | 400 | 400 | 400 | - | 100 | 1500 | 400 | 400 | 400 |
| | | Heater-irradiated heating amount (W/cm²) | | | | 3.1 | 4.7 | 7.8 | 3.1 | 3.1 | 3.1 | 3.1 | 3.1 | 0.0 | 4.7 | 11.6 | 3.1 | 3.1 | 3.1 |
| Non-coated paper | | Cumulative heating amount Q2 (J/cm²) | | | | 0.0 | 0.0 | 0.0 | 0.0 | 0.0 | 0.0 | 0.0 | 0.0 | 0.0 | 0.0 | 0.0 | 0.0 | 0.0 | 0.0 |
| Evaluation | | Bridging | | | | A | A | B | A | A | A | A | A | C | NG | C | A | A | C |
| | | OD | | | | A | A | A | A | A | B | A | A | A | A | A | C | C | A |
| | | Discharge properties | | | | A | A | A | A | B | A | A | A | A | A | A | A | A | C |

| | | | | | | | | | | | | | | | | | | | |
|---|---|---|---|---|---|---|---|---|---|---|---|---|---|---|---|---|---|---|---|
| *The values in the resin-dispersed pigment section are fixed quantities of pigment. *The values in the fine resin particles section are fixed quantities of resin. | | | | | | | | | | | | | | | | | | | |

As illustrated in Table 1, in embodiments 1 through 9, there was no C evaluation for any of bridging, OD, and discharge properties, and the evaluation results were favorable. Conversely, in comparative example 1, for which the cumulative heating amount Q1 and the cumulative heating amount Q2 were the same, the bridging on the coated paper was evaluated as C.

Furthermore, in comparative example 2, for which the cumulative heating amount Q1 was 5.9 J/cm², scorching occurred on the coated paper during printing (listed as "NG" in Table 1). Furthermore, in comparative example 3, for which the irradiation heat of the heater was 11.6 W/cm² and the conveying speed of the sheet below the heater was 1,500 mm/s, the bridging on the coated paper was evaluated as C. This is understood to be because there was not sufficient time for the ink to spread on the coated paper because of no enough time until the fluidity of the water-based ink was lost because drying was extremely short.

Conversely, in comparative example 4, for which polyethylene glycol having a molecular weight of 400 was used as the water-soluble organic compound, the OD of the non-coated paper was evaluated as C. Furthermore, in comparative example 5, for which polyethylene glycol having a molecular weight of 6,000 was used as the water-soluble organic compound, the bridging on coated paper was evaluated as C, and the discharge properties were evaluated as C.

### REFERENCE SIGNS LIST

- 25: feed roller (conveyance mechanism)
- 26: conveyance roller (conveyance mechanism)
- 27: dispensing roller (conveyance mechanism)
- 34: print head (head)
- 38: heater (heating unit)

## Claims

1. A recording method for discharging water-based recording ink from a head onto a recording medium conveyed in a conveying direction by a conveyance mechanism,
heating the recording medium or the water-based recording ink adhered to the recording medium by a heating unit with a cumulative heating amount Q1 on the condition that the recording medium is determined to be coated paper, and
heating the recording medium or the water-based recording ink adhered to the recording medium by the heating unit with a cumulative heating amount Q2 smaller than the cumulative heating amount Q1 on the condition that the recording medium is determined to not be coated paper, wherein:
the water-based recording ink includes a resin dispersion pigment, fine resin particles, a water-soluble organic compound, and water;
the melting point of the water-soluble organic compound is within a range of 20°C or more and 55°C or less; and
the viscosity of a 50 mass% aqueous solution of the water-soluble organic compound is 8.5 mPa·s or more at 20°C and 90 mPa s or less at 50°C.

2. The recording method according to claim 1, wherein the cumulative heating amount Q2 is zero.

3. The recording method according to claim 1 or 2, wherein a conveying speed of the conveyance mechanism at a position opposite to the heating unit is 100 cm/sec or less.

4. The recording method according to any one of claims 1 to 3, wherein the heating unit is an IR heater and is driven such that an irradiated heating amount per unit area is 8 W/cm² or less, and
the cumulative heating amount Q1 is 3.0 J/cm² or less.

5. The recording method according to any of claims 1 to 4, wherein the water-soluble organic compound is polyethylene glycol having a molecular weight within a range of 600 to 4,000.

6. A water-based recording ink used in a recording device which discharges the water-based recording ink from a head onto a recording medium conveyed in a conveying direction by a conveyance mechanism, heats the recording medium or the water-based recording ink adhered to the recording medium by a heater with a cumulative heating amount Q1 on the condition that the recording medium is determined to be coated paper, and heats the recording medium or the water-based recording ink adhered to the recording medium by the heater with a cumulative heating amount Q2 smaller than the cumulative heating amount Q1 on the condition that the recording medium is determined to not be coated paper,
wherein the water-based recording ink comprises a resin dispersion pigment, fine resin particles, a water-soluble organic compound, and water,
the melting point of the water-soluble organic compound is within a range of 20°C to 55°C, and
the viscosity of a 50 mass% aqueous solution of the water-soluble organic compound is 8.5 mPa·s or more at 20°C and 90 mPa s or less at 50°C.
